# EUROPEAN PATENT APPLICATION

(11) **EP 2 390 691 A1**
(43) Date of publication of application: **30.11.2011**
(21) Application number: 10172354.2
(22) Date of filing: 10.08.2010
(51) Int. Cl.: G02B 6/00

(54) **Light guide**

(30) Priority: 23.03.2010 TW 099205055
(71) Applicant: TYC Brother Industrial Co., Ltd., Tainan 702 (TW)
(72) Inventor: Shih, Ming-Jhih, Tainan 702 (TW)
(74) Representative: 2K Patentanwälte Blasberg Kewitz & Reichel

(57) **Abstract**

The present invention relates to a light guide. The light guide includes at least one incident portion, a light-emitting surface, a diffusing portion and two lateral portions. The incident portion is disposed at at least one end of the light guide, and used to receive at least one light source. The light-emitting surface is used to guide light. The diffusing portion is disposed opposite the light-emitting surface, and has a plurality of zigzag structures used to guide light to the light-emitting surface. Two lateral portions are connected between the light-emitting surface and the diffusing portion respectively, and a plurality of surfaces of the lateral portions are part of a camber of a long border of an ellipse. The incident portion according to the present invention may further have an accommodating hole and a free form; the accommodating hole is used to accommodate the light source, and the free form is disposed at the periphery of the incident portion. The light guide according to the present invention allows light to be guided uniformly from the light-emitting surface, and the incident portion of the light guide according to the present invention receives most light emitted from the light source, thereby enhancing the guiding efficiency of the light guide.

## Description

### Field of the Invention

### 1. Field of the Invention

The present invention relates to a light guide, and more particularly to a light guide for vehicular lamps.

### 2. Description of the Related Art

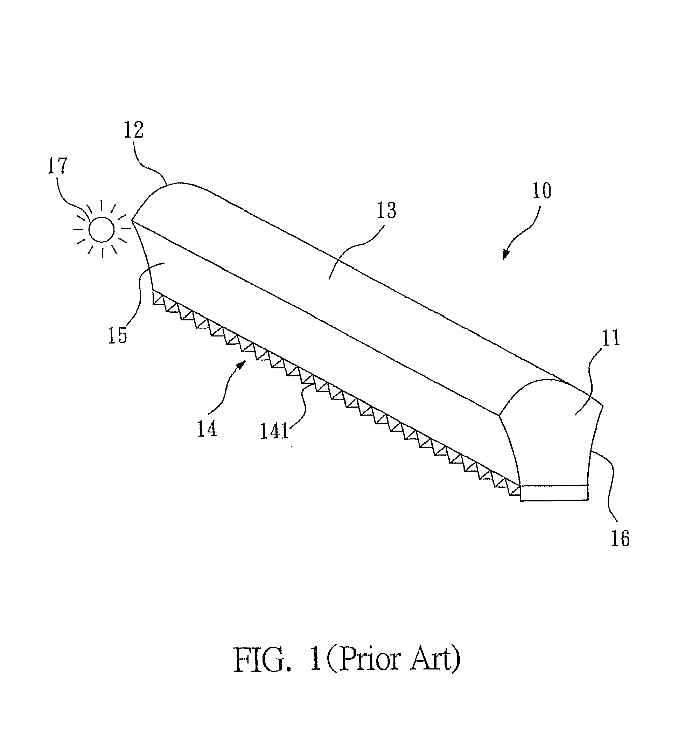

FIG. 1 shows a schematic view of a conventional light guide for vehicular lamps. The conventional light guide 10 comprises a first adjacent surface 11, a second adjacent surface 12, a light-emitting surface 13, a diffusing portion 14 and two defocus surfaces 15, 16. The first adjacent surface 11 and the second adjacent surface 12 are disposed at two ends of the conventional light guide 10, and used to receive a light source 17. The light-emitting surface 13 is used to guide light. The diffusing portion 14 is disposed opposite the light-emitting surface 13, and has a plurality of zigzag structures 141 used to guide light to the light-emitting surface 13. Two defocus surfaces 15, 16 are connected between the light-emitting surface 13 and the diffusing portion 14, respectively.

Two defocus surfaces 15, 16 disperse and reflect light to the light-emitting surface 13 or the diffusing portion 14, so that the light guided by the light-emitting surface 13 comes from the defocus surfaces 15, 16 or the diffusing portion 14, and the light guided by the light-emitting surface 13 is not uniform. Moreover, the light source 17 is disposed directly adjacent to the first adjacent surface 11 and the second adjacent surface 12, so that only part of the light enters the light guide 10, and the light guide 10 has low guiding efficiency.

Therefore, it is necessary to provide a light guide to solve the above problems.

### SUMMARY OF THE INVENTION

The present invention is directed to a light guide. The light guide comprises at least one incident portion, a light-emitting surface, a diffusing portion and two lateral portions. The incident portion is disposed at at least one end of the light guide, and used to receive at least one light source. The light-emitting surface is used to guide light. The diffusing portion is disposed opposite the light-emitting surface, and has a plurality of zigzag structures used to guide light to the light-emitting surface. Two lateral portions are connected between the light-emitting surface and the diffusing portion, respectively, and a plurality of surfaces of the lateral portions are part of a camber of a long border of an ellipse.

The present invention is further directed to a light guide. The light guide comprises at least one incident portion, a light-emitting surface, a diffusing portion and two lateral portions. The incident portion is disposed at at least one end of the light guide, and used to receive at least one light source. The incident portion has an accommodating hole and a free form; the accommodating hole is used to accommodate the light source, and the free form is disposed at the periphery of the incident portion. The light-emitting surface is used to guide light. The diffusing portion is disposed opposite the light-emitting surface, and has a plurality of zigzag structures used to guide light to the light-emitting surface. Two lateral portions are connected between the light-emitting surface and the diffusing portion, respectively.

The light guide according to the present invention allows light to be guided uniformly from the light-emitting surface, and the incident portion of the light guide according to the present invention receives most light emitted from the light source, thereby enhancing the guiding efficiency of the light guide.

### BRIEF DESCRIPTION OF THE DRAWINGS

FIG. 1 is a schematic view of a conventional light guide for vehicular lamps;
FIG. 2 is a perspective view of a light guide according to a first embodiment of the present invention;
FIG. 3 is a cross-sectional view of the light guide according to the first embodiment of the present invention;
FIG. 4 is a cross-sectional view of a light guide according to a second embodiment of the present invention;
FIG. 5 is a side view of the light guide according to the first embodiment of the present invention; and
FIGs. 6 and 7 are schematic views of paths of reflected light.

### DETAILED DESCRIPTION OF THE INVENTION

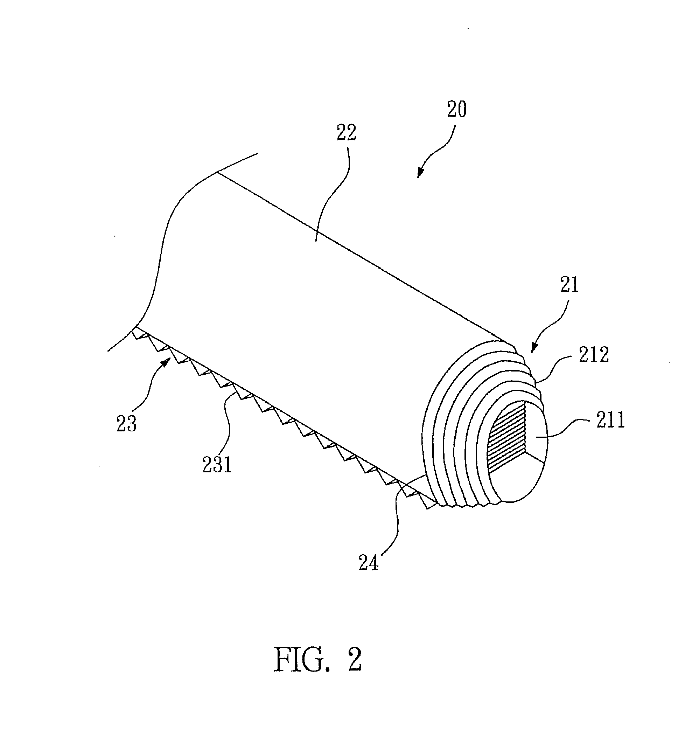

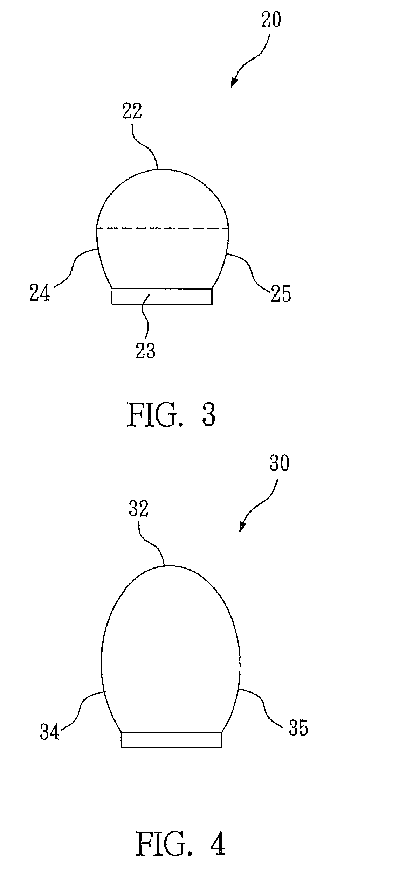

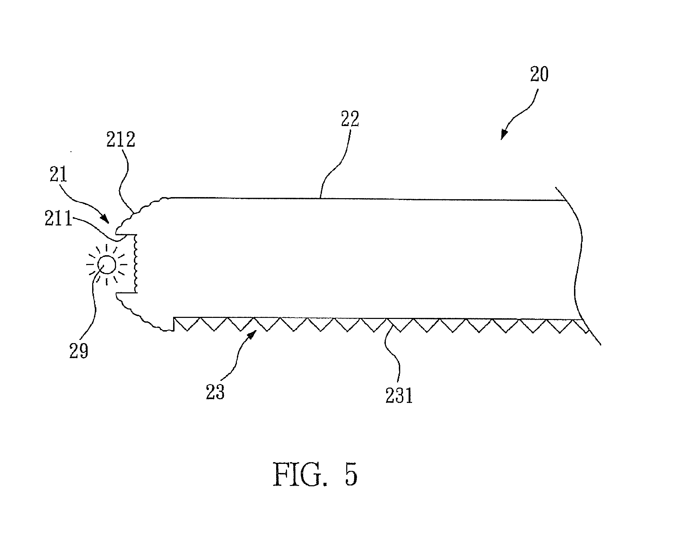

FIG. 2 shows a perspective view of a light guide according to a first embodiment of the present invention; FIG. 3 shows a cross-sectional view of the light guide according to the first embodiment of the present invention; FIG. 5 shows a side view of the light guide according to the first embodiment of the present invention. The light guide according to the present invention may be used for vehicular lamps. As shown in FIGs. 2, 3 and 5, a light guide 20 according to a first embodiment of the present invention comprises at least one incident portion 21, a light-emitting surface 22, a diffusing portion 23 and two lateral portions 24, 25. The incident portion 21 is disposed at at least one end of the light guide 20, and used to receive at least one light source 29. The light source 29 may be a light-emitting diode (LED) lamp.

In the embodiment, the light guide 20 has two incident portions 21 disposed at two ends of the light guide 20 respectively. The incident portion 21 has an accommodating hole 211 and a free form 212; the accommodating hole 211 is used to accommodate the light source 29, and the free form 212 is disposed at the periphery of the incident portion 21. The free form 212 comprises a plurality of curved surfaces, and the curved surfaces are connected smoothly. The free form 212 may comprise a plurality of circular curved surfaces; alternatively, the free form 212 may comprise a plurality of sectional curved surfaces.

The light-emitting surface 22 is used to guide light. The diffusing portion 23 is disposed opposite the light-emitting surface 22, and has a plurality of zigzag structures 231 used to guide light to the light-emitting surface 22. Two lateral portions 24, 25 are connected between the light-emitting surface 22 and the diffusing portion 23 respectively, and a plurality of surfaces of the lateral portions 24, 25 are part of a camber of a long border of an ellipse.

In the embodiment, the light-emitting surface 22 is part of a camber of a circle, for example, a camber of a semicircle. Two ends of the light-emitting surface 22 are respectively and smoothly connected to the lateral portions 24, 25. In another embodiment, as shown in FIG. 4, the light-emitting surface 32 of a light guide 30 according to a second embodiment of the present invention may be part of a camber of a short border of an ellipse, and forms part of a camber of an ellipse with surfaces of the lateral portions 34, 35.

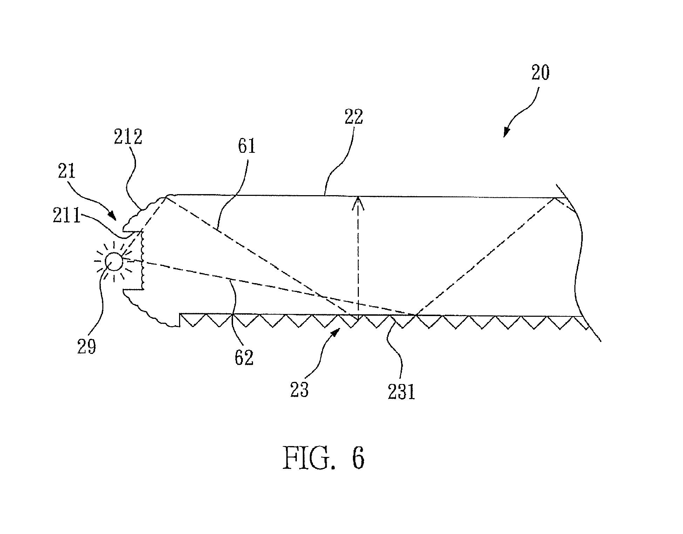

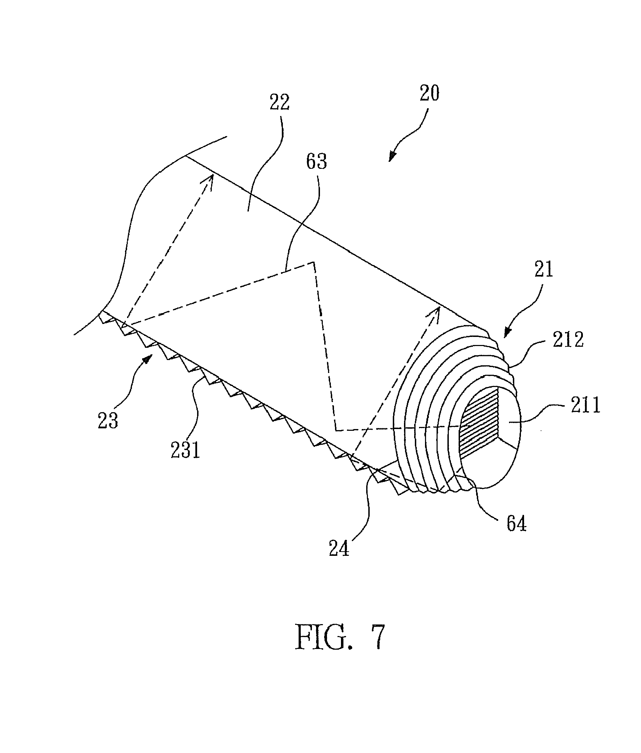

FIGs. 6 and 7 show schematic views of paths of reflected light. Referring to a first light path 61 and a fourth light path 64, the light source 29 illuminates the free form 212, the light is reflected to the zigzag structure 231 of the diffusing portion 23 from the free form 212, and then reflected to and guided by the light-emitting surface 22. Referring to a second light path 62, the light source 29 illuminates the zigzag structure 231 of the diffusing portion 23 directly, but the angle for the light to be reflected to the light-emitting surface 22 is too large, so the light is not directly guided by the light-emitting surface 22; the light is reflected to the zigzag structure 231 of the diffusing portion 23 by the light-emitting surface 22 again, and then reflected to and guided by the light-emitting surface 22.

Referring to a third light path 63, the light source 29 illuminates the lateral portion 24 directly; the light is reflected to the light-emitting surface 22 by the lateral portion 24, but the angle for the light to be reflected to the light-emitting surface 22 is too large, so the light is not directly guided by the light-emitting surface 22; the light is reflected to the zigzag structure 231 of the diffusing portion 23 by the light-emitting surface 22 again, and then reflected to and guided by the light-emitting surface 22.

Therefore, by utilizing the light guides 20, 30 according to the present invention, when the angle for the light to be reflected to the light-emitting surfaces 22, 32 is too large, the light is reflected to the diffusing portion 23 by the light-emitting surfaces 22, 32 again, and then reflected to and guided by the light-emitting surfaces 22, 32, which allows light to be guided uniformly from the light-emitting surfaces 22, 32. Moreover, by utilizing the incident portion 21 of the light guides 20, 30 according to the present invention, the free form 212 receives most light emitted from the light source 29, and reflects light to the diffusing portion 23, the lateral portions 24, 25, 34, 35 or the light-emitting surfaces 22, 32, thereby enhancing the guiding efficiency of the light guides 20, 30.

While several embodiments of the present invention have been illustrated and described, various modifications and improvements can be made by those skilled in the art. The embodiments of the present invention are therefore described in an illustrative but not restrictive sense. It is intended that the present invention should not be limited to the particular forms as illustrated, and that all modifications which maintain the spirit and scope of the present invention are within the scope defined by the appended claims.

## Claims

1. A light guide, comprising:
at least one incident portion, disposed at at least one end of the light guide, and used to receive at least one light source;
a light-emitting surface, used to guide light;
a diffusing portion, disposed opposite the light-emitting surface, and having a plurality of zigzag structures used to guide light to the light-emitting surface; and
two lateral portions, connected between the light-emitting surface and the diffusing portion, respectively, wherein a plurality of surfaces of the lateral portions are part of a camber of a long border of an ellipse.

2. The light guide as claimed in Claim 1, wherein the light-emitting surface is part of a camber of a circle.

3. The light guide as claimed in Claim 1, wherein the light-emitting surface is part of a camber of a short border of an ellipse, and forms part of a camber of an ellipse with surfaces of the lateral portions.

4. The light guide as claimed in Claim 1, wherein the incident portion has an accommodating hole and a free form, the accommodating hole is used to accommodate the light source, and the free form is disposed at the periphery of the incident portion.

5. The light guide as claimed in Claim 4, wherein the free form comprises a plurality of circular curved surfaces.

6. The light guide as claimed in Claim 4, wherein the free form comprises a plurality of sectional curved surfaces.

7. A light guide, comprising:
at least one incident portion, disposed at at least one end of the light guide, and used to receive at least one light source, wherein the incident portion has an accommodating hole and a free form, the accommodating hole is used to accommodate the light source, and the free form is disposed at the periphery of the incident portion;
a light-emitting surface, used to guide light;
a diffusing portion, disposed opposite the light-emitting surface, and having a plurality of zigzag structures used to guide light to the light-emitting surface; and
two lateral portions, connected between the light-emitting surface and the diffusing portion, respectively.

8. The light guide as claimed in Claim 7, wherein the light-emitting surface is part of a camber of a circle.

9. The light guide as claimed in Claim 7, wherein the light-emitting surface is part of a camber of a short border of an ellipse, a plurality of surfaces of the lateral portions are part of a camber of a long border of an ellipse, and the light-emitting surface and surfaces of the lateral portions form part of a camber of an ellipse.

10. The light guide as claimed in Claim 7, wherein the free form comprises a plurality of circular curved surfaces.

11. The light guide as claimed in Claim 7, wherein the free form comprises a plurality of sectional curved surfaces.
